# EUROPEAN PATENT SPECIFICATION

(11) **EP 1 218 994 B1**
(45) Date of publication and mention of the grant of the patent: **26.11.2003**
(21) Application number: 00969424.1
(22) Date of filing: 04.10.2000
(51) Int. Cl.: H02B 11/12

(54) **ELECTRICAL CONNECTION DEVICE FOR POWER CIRCUIT BREAKERS**
ELEKTRISCHE ANSCHLUSSVORRICHTUNG FÜR LEISTUNGSSCHALTER
DISPOSITIF DE CONNEXION ELECTRIQUE DESTINE A DES DISJONCTEURS ELECTRIQUES

(30) Priority: 08.10.1999 IT MI992113
(43) Date of publication of application: 03.07.2002
(73) Proprietor: ABB Service Srl, 20135 Milano (IT)
(72) Inventor: DOSMO, Renato, I-24040 Brembate di Sopra (IT)
(74) Representative: Giavarini, Francesco
(86) International application number: EP0009753
(87) International publication number: WO01028054

(56) References cited:
- EP-A- 0 859 438

## Description

The present invention relates to an electrical connection device for low-voltage power circuit breakers having particular functions and characteristics; more specifically, the expression "low-voltage power circuit breaker" is to be understood as designating a circuit breaker suitable for applications with operating voltages below 1000 Volt.

Specific devices, commonly known in the art as automatic power circuit breakers, are generally used in low-voltage industrial electric systems; said power circuit breakers work with high currents whose nominal value, depending on the applications, can vary over a wide range, typically from a few hundred to several thousand amperes, and are conceived so as to provide a performance which is required to ensure the correct operation of the electric power supply circuit that they protect and of the loads connected thereto.

In particular, they protect the loads from abnormal events caused for example by faults related to short-circuits or overloads by automatically opening said power supply circuit; they allow the correct connection/disconnection of loads to/from the electric power supply circuit; they ensure that the nominal current for the various connected users is actually equal to the required current; they allow, by manual intervention on an actuation lever of said circuit breaker and corresponding separation of the moving contacts from the fixed contacts, the full isolation of a load with respect to a power source and the consequent disconnection of the circuit that they protect.

In the current state of the art, automatic power circuit breakers are generally available in practical applications in three different constructive embodiments, i.e., a first embodiment generally indicated as "fixed configuration", a second embodiment indicated as "plug-in configuration", and a third embodiment indicated as "withdrawable configuration"; these circuit breakers, in their various embodiments, while allowing adequate provision of the required performance, still have drawbacks and disadvantages.

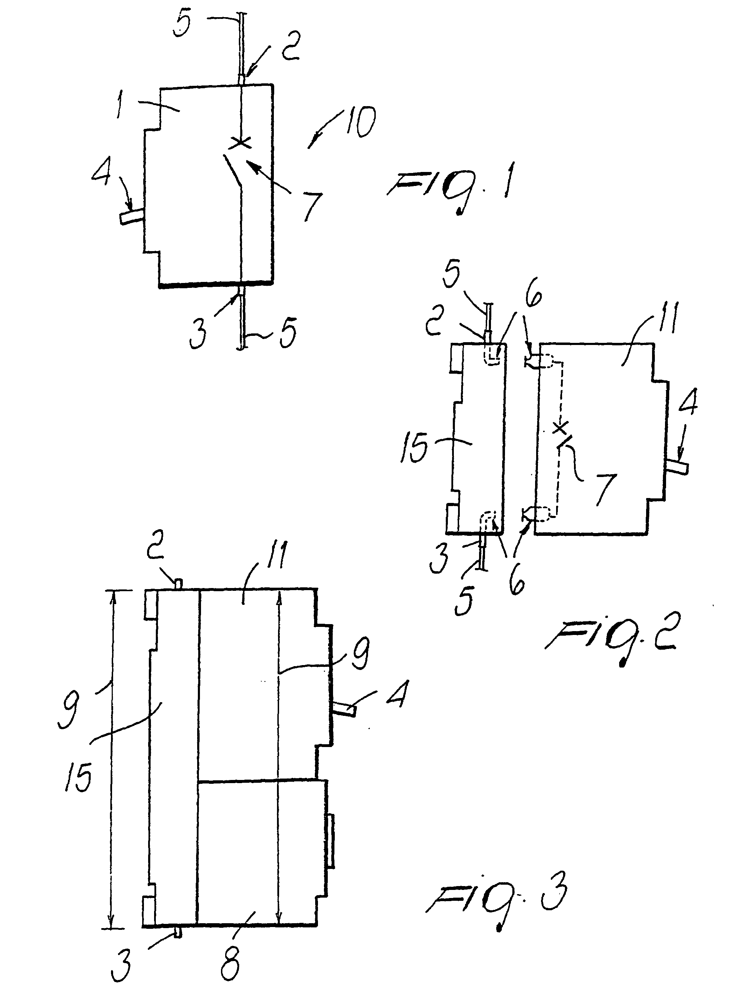

In particular, in case of an automatic power circuit breaker in a "fixed configuration", shown schematically in Figure 1, the circuit breaker is constituted by a single body 10 having an insulating casing 1 which contains interruption mechanisms which comprise fixed contacts and moving contacts, generally designated by the reference numeral 7 in Figure 1; the circuit breaker is further provided with a lever 4 for the manual actuation of the contacts 7 and with appropriate terminals 2 and 3 which allow electrical connection in input and output to an electric circuit 5 in which said circuit breaker is inserted.

Although this solution is rather simple from the constructive point of view and therefore relatively easy to manufacture, it is particularly disadvantageous when the circuit breaker is installed. In this situation, if it is necessary to replace the circuit breaker or perform maintenance thereon, it is in fact indispensable to act directly on the electric cables of the power circuits and disconnect them from the connection terminals 2 and 3 of the circuit breaker, with a consequent commitment of resources in terms of times and costs.

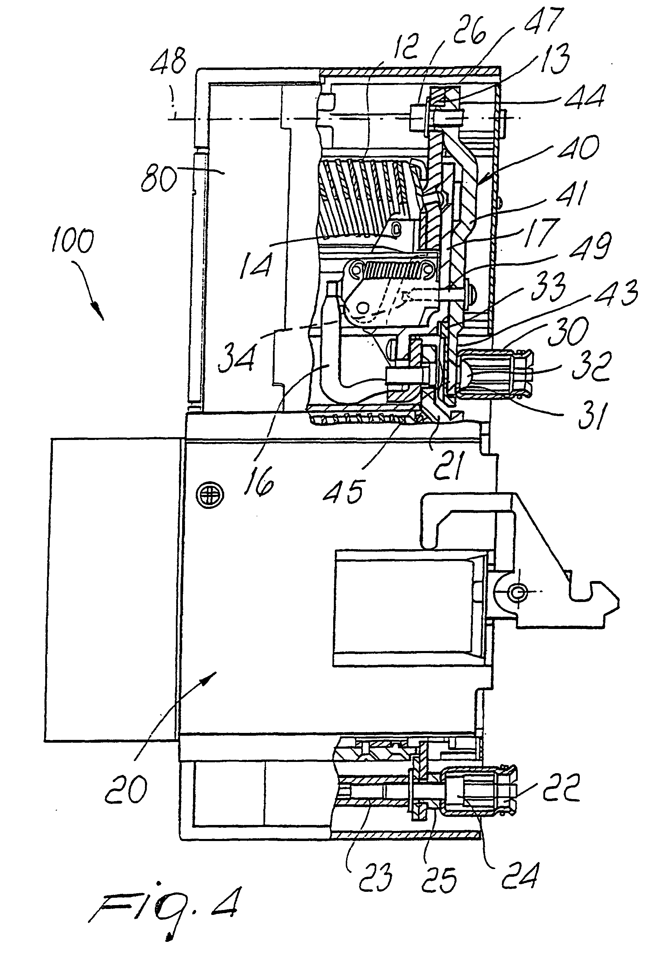

If the circuit breaker is realized in a "plug-in configuration", as shown in Figure 2, it has a fixed block 15 provided with terminals 2 and 3 for connection in input and output to the electric circuit 5 and a movable part which comprises an interruption block 11 which has interruption mechanisms and a manual lever 4 for actuating the contacts, similar to what has already been described. Furthermore, both the fixed block 15 and the movable interruption block 11 are provided with appropriate disconnection contacts 6; said disconnection contacts 6 allow to electrically connect, so as to allow mutual separation, the interruption block 11 and the fixed block 15 while allowing to have continuity of the electric circuit in which the circuit breaker is inserted.

Furthermore, as shown schematically in Figure 3, the movable part of the circuit breaker generally comprises an auxiliary coupling module 8 which, depending on the applications, can be constituted for example by a residual-current protection relay or by a current limiting module; said auxiliary modules 8 comprise contact elements which are electrically connected to the contacts of the interruption block 11 and are also provided with disconnection contacts.

In these cases, the electrical connections between the various parts of the circuit breaker provide for the coupling of the disconnection contacts 6 of the fixed block 15 to the corresponding disconnection contacts that are respectively provided on the interruption block 11 and on the auxiliary module 8.

The solution of a power circuit breaker in the "plug-in configuration" offers the great advantage of facilitating replacement of the movable parts of the circuit breaker or inspection thereof for maintenance; in such cases, by virtue of the presence of the disconnection contacts 6, it is in fact sufficient to manually disconnect the movable parts from the fixed block 15, without acting on the electric power cables connected to the terminals 2 and 3, and therefore with simple and quick interventions.

Similar advantages occur if the circuit breaker is arranged in a "withdrawable configuration"; this constructive embodiment in fact differs from the plug-in one only in that an additional supporting structure is used which is fixed outside the circuit breaker and facilitates extraction of the movable parts from the fixed one by using appropriate tools.

A significant drawback of power circuit breakers in rem plug-in or withdrawable configurations is the fact that a reference dimension of the movable part of the circuit breaker, designated by the reference numeral 9 in Figure 3 and understood as interruption block 11 plus coupling module 8, is associated with the corresponding dimension of the fixed block 15. Accordingly, when the version of the movable part that is used changes, and therefore its dimensions vary, it is correspondingly necessary to also modify the dimensions of the fixed part associated therewith. This leads to very low flexibility in practical applications, since it is necessary to produce multiple series of fixed parts, with low standardization of the range of manufactured components and ultimately with a significant increase in manufacturing costs.

This lack of flexibility also leads to an increase in installation difficulties; for example, in electrical panels it is necessary, in each instance, to provide receptacles of different sizes according to the type and configuration of the circuit breaker to be used. Document EP-A-0 859 438 discloses a connection device for a low-voltage power circuit breaker according to the state of the art.

The aim of the present invention is to provide an electrical connection device for a low-voltage power circuit breaker which allows to use a single type of fixed part of the circuit breaker regardless of the dimensions and components of the movable part that can be coupled thereto.

Within the scope of this aim, an object of the present invention is to provide an electrical connection device for a low-voltage power circuit breaker which allows to achieve higher standardization of the range of manufactured components with respect to the prior art.

Another object of the present invention is to provide an electrical connection device for a low-voltage power circuit breaker which allows to significantly reduce manufacturing costs with respect to the prior art.

Another object of the present invention is to provide an electrical connection device for a low-voltage power circuit breaker which allows to simplify installation and maintenance of said circuit breaker.

Another object of the present invention is to provide an electrical connection device for a low-voltage power circuit breaker which, with respect to the prior art, allows better standardization of the receptacles of the panels in which the circuit breaker is to be inserted.

Another object of the present invention is to provide an electrical connection device for a low-voltage power circuit breaker which is highly reliable, relatively easy to manufacture and at competitive costs.

This aim, these objects and others which will become apparent hereinafter are achieved by a connection device for a low-voltage power circuit breaker, wherein the circuit breaker comprises:
-- a fixed part having terminals for connection to an electric circuit in which the circuit breaker is to be inserted, and disconnection contacts;
-- a movable part, which can be coupled to the fixed part and comprises an auxiliary module which has contact means, and an interruption block which contains at least one fixed contact and a moving contact which can be mutually coupled and are electrically connected to said contact means; characterized in that it comprises a first conducting element which is suitable to be connected to a corresponding disconnection contact and a second conducting element which is suitable to be connected, respectively, to said first conducting element and to said contact means.

The device thus conceived acts as an electrical connection bridge and in practice cancels the effect of the dimensional differences between the various parts; accordingly, it becomes possible to use a single type of fixed part of the circuit breaker, regardless of the dimensions and components of the movable part associated therewith, with a benefit from the point of view of manufacture and flexibility in practical use. Furthermore, the use of a single type of fixed part of the circuit breaker advantageously allows to have better standardization of the range of manufactured components.

Another significant advantage is the fact that the connection device according to the invention allows to have high standardization of the receptacles of the panels in which the circuit breaker is inserted, regardless of its initial configuration or of the modifications chosen during its use; in such cases it is in fact sufficient to consider the dimensions of the fixed part of the circuit breaker, not also the dimensions of the movable parts.

Further advantages will become apparent from the description of a preferred but not exclusive embodiment of an electrical connection device for a low-voltage power circuit breaker according to the invention, illustrated only by way of non-limitative example in the accompanying drawings, wherein:
Figure 1 is a schematic view of a known low-voltage power circuit breaker in a "fixed configuration";
Figure 2 is a schematic view of a known low-voltage power circuit breaker in a "plug-in configuration";
Figure 3 is a schematic view of a known low-voltage power circuit breaker in a "plug-in configuration", in which the movable part of the circuit breaker comprises an auxiliary coupling module;
Figure 4 is a partially sectional side view of the movable part of a low-voltage power circuit breaker in which the connection device according to the invention is used;
Figure 5 is a perspective view of the movable part of a low-voltage power circuit breaker during installation in a "withdrawable configuration", using the connection device according to the invention;
Figure 6 is a perspective view of a low-voltage power circuit breaker installed in a "withdrawable configuration";
Figure 7 is a perspective view of a low-voltage power circuit breaker installed in a "plug-in configuration".

The connection device according to the invention is described with particular reference to its use in the provision of a power circuit breaker in the "withdrawable configuration" without thereby intending to limit its scope of application in any way.

As shown in Figures 4-6, the movable part of the power circuit breaker, generally designated by the reference numeral 100, comprises an interruption block 20 which contains interruption mechanisms, not shown in the figure, whose embodiment and operation are widely known in the art. In particular, the interruption mechanisms comprise at least one moving contact and at least one fixed contact 21, shown partially in Figure 4, which can be mutually coupled/uncoupled during closure/opening maneuvers of said circuit breaker. The interruption block 20 is furthermore provided with disconnection contacts 22; each disconnection contact 22 is substantially tulip-shaped and is fixed to the structure of the interruption block 20 by virtue of appropriate fixing means which comprise, for example, a locking nut 23, a fixing screw 24 and a spacer 25, in manners which are widely known in the art.

The movable part 100 of the circuit breaker furthermore comprises an auxiliary coupling module 80 which is connected to the interruption block 20; in the embodiment shown in Figures 4 to 6, the auxiliary module 80 is constituted by a current limiting module. As an alternative and in a fully equivalent manner, it is possible to use as a coupling module 80 for example a residual-current protection relay or optionally any other coupling module, which may be used for performing any desired function, so long as it is compatible with the applications.

As shown in Figure 4, the current limiting module 80 comprises an arc chamber 12 and contact means which are electrically connected to the interruption means of the block 20; in particular, the contact means comprise a fixed contact element 13 and a moving contact element 14 which can be coupled/uncoupled with respect to the fixed contact element 13 and is equipped with movement means, for example of the spring type. In turn, the moving contact element 14 is electrically connected to the fixed contact 21 of the interruption block 20 by virtue of conducting means 16, for example flexible copper strands; furthermore, the moving contact element 14 and its movement system are contained in a supporting structure 17.

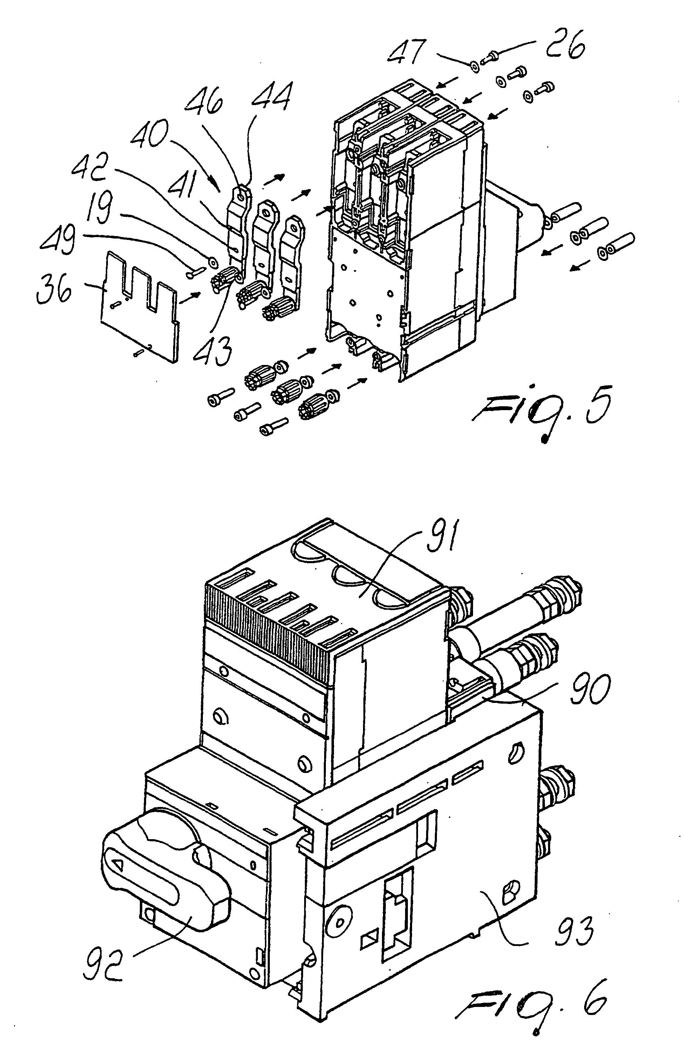

The fixed part of the circuit breaker, not shown in Figures 4 and 5 for the sake of simplicity in description, has a structure which is widely known in the art and comprises connection terminals in input and in output with respect to an electric circuit in which the circuit breaker is inserted, and disconnection contacts which are operatively connected to the connection terminals; said disconnection contacts are divided along two substantially mutually parallel rows and are suitable to facilitate connection to the movable part of the circuit breaker, in the manner described hereinafter.

Advantageously, the electrical connection among the various components of the circuit breaker occurs by using the device according to the invention; said device uses a first conducting element 30 which is suitable to be connected to a corresponding disconnection contact which belongs to the fixed part of the circuit breaker and a second conducting element 40 which is suitable to be connected respectively to the first conducting element 30 and to the contact means of the current limiting module 80.

In the embodiment shown in Figures 4 to 6, the first conducting element 30 comprises a contact 30 which is substantially tulip-shaped; advantageously, the structure of the tulip-shaped contact 30 is practically identical to the structure of the disconnection contact 22, thus allowing to provide advantageous economies of scale from the point of view of manufacture. Furthermore, the tulip-shaped contact 30 acts not only as a component of the connection device but also as a disconnection contact, allowing to optimize the number of components used.

As an alternative, and according to the requirements of the application, instead of the tulip-shaped contact 30 it is possible to use a first conducting element having a different configuration, so long as it is compatible with the application.

In turn, the second conducting element 40 has an elongated body which has a central portion 41 provided with an undulated transverse cross-section, in which there is a hole 42 which is suitable to accommodate means for fixing to the supporting structure 17 of the moving contact element 14. Two substantially flat ends 43 and 44 protrude from the central portion 41, in mutually opposite directions, and form abutment planes respectively for the base 31 of the tulip-shaped contact 30 and for the fixed contact element 13; furthermore, holes 45 and 46 are provided on the end 43 and on the end 44 and are suitable to respectively accommodate fixing means with the tulip-shaped contact 30 and with the fixed contact element 13. In particular, the hole 46 is threaded.

Alternatively, and according to a solution not shown in the Figures, the first element 30 and the second element 40 could be structurally realized in a single piece.

The assembly of the various parts of the circuit breaker by means of the device according to the invention is now described; in this description, and merely for the sake of simplicity in description, specific reference is made to the connection of a single pole of the circuit breaker, although a connection device can evidently be used for each pole, as shown in Figure 5.

In practice, before assembling the various parts that compose the circuit breaker, the tulip-shaped contact 30 is fixed to the end 43 of the conducting element 40; in the illustrated embodiment, the two parts are mutually fixed by inserting a fixing pin 32 in the tulip-shaped contact 30 and upsetting said pin against the edges of the perforated base 31 and of the hole 45. In this manner, by means of simple and quick operations, one obtains excellent mechanical bonding between the fixing pin 32 and the contact 30, with the assurance of having adequate electrical conduction between the parts. As an alternative, fixing might be provided by welding the tulip-shaped contact 30 to the base 31, or by threading the hole 45 and using a threaded screw or in any other manner which is compatible with the application.

During assembly, first an insulating diaphragm 33 is placed proximate to the fixed contact 21; then the assembly constituted by the tulip-shaped contact 30 and the conducting element 40 is positioned so as to place the two ends 43 and 44 respectively at the insulating diaphragm 33 and at the fixed contact element 13. The end 44 of the conducting element 40 and the fixed contact element 13 are mutually fixed by means of a threaded screw 26 which is inserted, through an opening 48 of the module 80, in a hole formed in the fixed contact element 13 and is screwed into the threaded hole 46; a washer 47 can be inserted between the head of the screw 26 and the hole of the fixed contact element 13. Fixing is then completed by inserting in the hole 42 an additional fixing screw 49, which engages a threaded blind seat 34 formed in the supporting structure 17; a washer 19 is interposed between the head of the fixing screw 49 and the element 40.

Accordingly, the conducting element 40 is rigidly fixed to the coupling module 80 and, by virtue of its shape and of the fixing system used, the tulip-shaped contact 30 is aligned with the corresponding disconnection contact 22 of the interruption block 20; in this manner it is possible to prevent any rotation of the conducting element 40 or any axial offset between the contact 30 and the contact 22. Finally, an insulating wall 36 is fixed and covers the region occupied by the conducting elements 40.

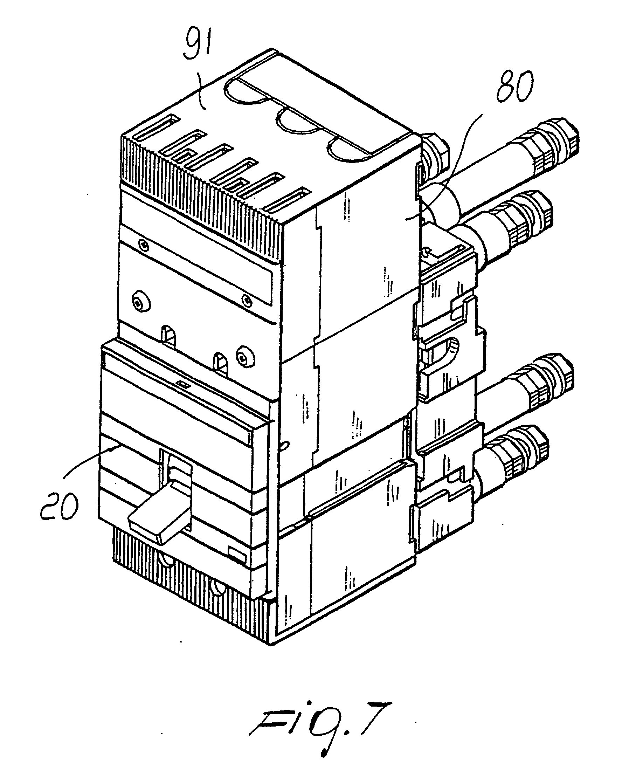

As shown in Figure 6, the assembly of the movable part 100 of the circuit breaker thus obtained can then be coupled to the fixed part 90, connecting the disconnection contacts 22 and the tulip-shaped contacts 30 to the corresponding disconnection contacts provided on said fixed part 90; said figure also shows terminal protection diaphragms 91, a system 92 for the manual actuation of the interruption block, and a coupling structure 93 which is fixed externally to the circuit breaker and allows to remove the movable part by virtue of appropriate tools. The shape and functions of the walls 91, of the actuation system 92 and of the coupling structure 93 are of a kind widely known in the art and accordingly they are not described in detail.

If one wishes to provide a power circuit breaker in a "plug-in configuration", the above description applies in exactly the same way; in this case, as shown in Figure 7, the only differences consist in not using the actuation system 92 and the coupling structure 93, since removal of the movable part from the fixed part occurs manually.

In practice it has been found that the device according to the invention fully achieves the intended aim and objects, since if the components that constitute the movable part of the circuit breaker vary, and therefore their corresponding dimensions vary, the fixed part that is used can always be the same. The dimensional variations are in fact practically eliminated by the use of the device, which acts like a connection bridge and in which it is sufficient, if necessary, to modify only the length of the conducting element 40.

Attention is also drawn to the fact that all the innovative functions and the inventive aspects of the device can be achieved by using commonly commercially available elements and materials with extremely low costs, according to a constructive solution which is simple and easy to install in practice.

The device thus conceived is susceptible of modifications and variations, all of which are within the scope of the appended claims. For example, it is possible to provide the connection device as a single part instead of as two components that can be coupled; or it is possible to use a single auxiliary coupling module, as described above, or two modules. In this case, the two modules, for example a current limiting module and a residual-current protection relay, can be installed on opposite sides with respect to the interruption block, each as described above.

All the details may furthermore be replaced with technically equivalent elements.

In practice, the materials used, so long as they are compatible with the specific use, as well as the dimensions, may be any according to the requirements and the state of the art.

## Claims

1. A connection device for a low-voltage power circuit breaker, wherein the circuit breaker comprises:
-- a fixed part having terminals for connection to an electric circuit in which the circuit breaker is to be inserted, and disconnection contacts (22);
-- a movable part (100), which can be coupled to the fixed part and comprises an auxiliary module (80) which has contact means, and an interruption block (20) which contains at least one fixed contact (13) and a moving contact (14) which can be mutually coupled and are electrically connected to said contact means; **characterized in that** it comprises a first conducting element (30) which is suitable to be connected to a corresponding disconnection contact (22) and a second conducting element (40) which is suitable to be connected, respectively, to said first conducting element (30) and to said contact means.

2. The connection device according to claim 1, **characterized in that** said first conducting element (30) comprises a contact which is substantially tulip-shaped.

3. The connection device according to claim 1, **characterized in that** said second conducting element (40) has an elongated body which has a central portion (41) with an undulated transverse cross-section from which a first end (43) and a second end (44) protrude in mutually opposite directions, said ends forming an abutment plane respectively for the first conducting element (30) and for said contact means (13, 14).

4. The connection device according to claim 3, **characterized in that** a through hole (45) is formed in said first end (43) and is suitable to accommodate means (32) for fixing with the first conducting element (30).

5. The connection device according to claim 4, **characterized in that** said means for fixing with the first conducting element (30) comprise a fixing pin (32) which is suitable to be inserted in the through hole (45) and riveted therein.

6. The connection device according to claim 3, **characterized in that** a threaded through hole (46) is formed in said second end (44) and is suitable to accommodate means for fixing with the contact means (13).

7. The connection device according to claim 6, **characterized in that** said means for fixing with the contact means comprise a threaded screw (26).

8. The connection device according to claim 3, **characterized in that** a through hole (42) is formed in said central portion and is suitable to accommodate means for fixing with a structure (17) for containing said contact means.

9. The connection device according to claim 8, **characterized in that** said fixing means comprise a threaded screw (49) which is suitable to engage a blind seat (34) formed in said containing structure (17).

10. The connection device according to one or more of the preceding claims, **characterized in that** it comprises an insulating diaphragm (33) which is suitable to be interposed between the first conducting element (30) and said fixed contact (13).

11. The connection device according to claim 1, **characterized in that** said first (30) and second (40) conducting elements are formed monolithically.

12. The connection device according to one or more of the preceding claims, **characterized in that** said auxiliary module (80) is constituted by a residual-current protection relay or by a current limiting module.

13. A low-voltage power circuit breaker **characterized in that** it comprises a connection device according to one or more of the previous claims.

## Patentansprüche

1. Anschlussvorrichtung für einen Niedervolt-Leistungsschalter, wobei der Leistungsschalter aufweist:
- einen festen Teil, welcher Anschlüsse zur Verbindung mit einem elektrischen Schaltkreis aufweist, in welchen der Schalter einzufügen ist, und Trennkontakte (22);
- einen bewegbaren Teil, welcher an den festen Teil gekoppelt werden kann und ein Zusatzmodul (80), welches Kontaktmittel aufweist, und einen Unterbrecherblock (20) umfasst, welcher zumindest einen festen Kontakt (13) und einen sich bewegenden Kontakt (14) enthält, welche wechselseitig gekoppelt werden können, und welche elektrisch verbunden sind mit den Kontaktmitteln; **dadurch gekennzeichnet, dass** sie ein erstes leitendes Element (30), welches geeigneterweise mit einem entsprechenden Trennkontakt (22) zu verbinden ist, und ein zweites leitendes Element (40) aufweist, welches geeigneterweise jeweils mit dem ersten leitenden Element (30) und den Kontaktmitteln zu verbinden ist.

2. Anschlussvorrichtung gemäß Anspruch 1, **dadurch gekennzeichnet, dass** das erste leitende Element (30) einen Kontakt umfasst, welcher im Wesentlichen tulpenförmig ist.

3. Anschlussvorrichtung gemäß Anspruch 1, **dadurch gekennzeichnet, dass** das zweite leitende Element (40) einen verlängerten Körper aufweist, welcher einen zentralen Teil (41) aufweist, mit einem gewellten transversalen Querschnitt, von welchem ein erstes Ende (43) und ein zweites Ende (44) in wechselseitig gegenüber liegende Richtungen vorragen, wobei die Enden eine Anschlagebene jeweils für das erste leitende Element (30) und die Kontaktmittel (13, 14) ausbilden.

4. Anschlussvorrichtung gemäß Anspruch 3, **dadurch gekennzeichnet, dass** ein Durchgangsloch (45) in dem ersten Ende (43) ausgebildet ist, und es geeignet ist, um Mittel (32) aufzunehmen zum Fixieren des ersten leitenden Elements (30).

5. Anschlussvorrichtung gemäß Anspruch 4, **dadurch gekennzeichnet, dass** die Mittel zum Fixieren mit dem ersten leitenden Element (30) einen Fixierstift (32) umfassen, welcher geeignet ist, um in das Durchgangsloch (45) eingefügt zu werden und darin vernietet zu sein.

6. Anschlussvorrichtung gemäß Anspruch 3, **dadurch gekennzeichnet, dass** ein mit Gewinde versehenes Durchgangsloch (46) in dem zweiten Ende (44) ausgebildet ist und geeignet ist, um Mittel zum Fixieren mit den Kontaktmitteln (13) aufzunehmen.

7. Anschlussvorrichtung gemäß Anspruch 6, **dadurch gekennzeichnet, dass** die Mittel zum Fixieren mit den Kontaktmitteln eine Gewindeschraube (26) umfassen.

8. Anschlussvorrichtung gemäß Anspruch 3, **dadurch gekennzeichnet, dass** ein Durchgangsloch (42) in dem zentralen Teil ausgebildet ist und geeignet ist, um Mittel zum Fixieren mit einer Struktur (17) zum Enthalten der Kontaktmittel aufzunehmen.

9. Anschlussvorrichtung gemäß Anspruch 8, **dadurch gekennzeichnet, dass** die Fixiermittel eine Gewindeschraube (49) umfassen, welche geeignet ist, um in einen Blindsitz (43) einzugreifen, ausgebildet in der enthaltenden Struktur (17).

10. Anschlussvorrichtung gemäß einem oder mehreren der vorangegangenen Ansprüche, **dadurch gekennzeichnet, dass** sie eine isolierende Membran (33) umfasst, welche geeignet ist, um zwischen dem ersten leitenden Element (30) und dem festen Kontakt (13) zwischengeordnet zu sein.

11. Anschlussvorrichtung gemäß Anspruch 1, **dadurch gekennzeichnet, dass** die ersten (30) und zweiten (40) leitenden Elemente monolithisch ausgebildet sind.

12. Anschlussvorrichtung gemäß einem oder mehreren der vorangegangenen Ansprüche, **dadurch gekennzeichnet, dass** das Zusatzmodul (80) gebildet wird durch ein Reststrom-Schutzrelais oder durch ein Strombegrenzungsmodul.

13. Niedrigvolt-Leistungsschalter, **dadurch gekennzeichnet, dass** er eine Anschlussvorrichtung gemäß einem oder mehreren der vorherigen Ansprüche umfasst.

## Revendications

1. Un dispositif de connexion pour un disjoncteur de puissance basse tension, dans lequel le disjoncteur comprend :
une partie fixe ayant des bornes pour la connexion à un circuit électrique dans lequel le disjoncteur doit être inséré, et des contacts de déconnexion (22) ;
une partie mobile (100), qui peut être couplée à la partie fixe et comprend un module auxiliaire (80) qui a des moyens de contact, et un bloc interrupteur (20) qui contient au moins un contact fixe (13) et un contact mobile (14) qui peuvent être couplés l'un à l'autre et sont connectés électriquement aux dits moyens de contact ;
**caractérisé en ce qu'**il comprend un premier élément conducteur (30) qui est approprié pour être connecté à un contact de déconnexion correspondant (22) et un deuxième élément conducteur (40) qui est approprié pour être connecté audit premier élément conducteur (30) et aux dits moyens de contact, respectivement.

2. Le dispositif de connexion selon la revendication 1, **caractérisé en ce que** ledit premier élément conducteur (30) comprend un contact qui est sensiblement en forme de tulipe.

3. Le dispositif de connexion selon la revendication 1, **caractérisé en ce que** ledit deuxième élément conducteur (40) a un corps allongé qui a une partie centrale (41) avec une section transversale ondulée à partir de laquelle une première extrémité (43) et une seconde extrémité (44) dépassent dans des directions opposées l'une à l'autre, lesdites extrémités formant un plan de butée pour le premier élément conducteur (30) et pour lesdits moyens de contact (13, 14), respectivement.

4. Le dispositif de connexion selon la revendication 3, **caractérisé en ce qu'**un trou débouchant (45) est formé dans ladite première extrémité (43) et est approprié pour recevoir les moyens de fixation (32) avec le premier élément conducteur (30).

5. Le dispositif de connexion selon la revendication 4, **caractérisé en ce que** lesdits moyens de fixation avec le premier élément conducteur (30) comprennent un axe de fixation (32) qui est appropriée pour être inséré dans le trou débouchant (45) et riveté à l'intérieur de celui-ci.

6. Le dispositif de connexion selon la revendication 3, **caractérisé en ce qu'**un trou débouchant fileté (46) est formé dans ladite seconde extrémité (44) et est approprié pour recevoir les moyens de fixation avec les moyens de contact (13).

7. Le dispositif de connexion selon la revendication 6, **caractérisé en ce que** lesdits moyens de fixation avec les moyens de contact comprennent une vis filetée (26).

8. Le dispositif de connexion selon la revendication 3, **caractérisé en ce qu'**un trou débouchant (42) est formé dans ladite partie centrale et est approprié pour recevoir les moyens de fixation avec une structure (17) pour contenir lesdits moyens de contact.

9. Le dispositif de connexion selon la revendication 8, **caractérisé en ce que** lesdits moyens de fixation comprennent une vis filetée (49) qui est appropriée pour s'engager dans un siège aveugle (34) formé dans ladite structure contenante (17).

10. Le dispositif de connexion selon une ou plusieurs des revendications précédentes,
**caractérisé en ce qu'**il comprend un diaphragme isolant (33) qui est approprié pour être interposé entre le premier élément conducteur (30) et ledit contact fixe (13).

11. Le dispositif de connexion selon la revendication 1, **caractérisé en ce que** lesdits premier (30) et deuxième (40) éléments conducteurs sont formés en un seul bloc.

12. Le dispositif de connexion selon une ou plusieurs des revendications précédentes,
**caractérisé en ce que** ledit module auxiliaire (80) est constitué d'un relais de protection contre les courants résiduels ou d'un module de limitation de courant.

13. Un disjoncteur de puissance basse tension **caractérisé en ce qu'**il comprend un dispositif de connexion selon une ou plusieurs des revendications précédentes.
